# EUROPEAN PATENT SPECIFICATION

(11) **EP 1 112 677 B1**
(45) Date of publication and mention of the grant of the patent: **10.03.2004**
(21) Application number: 00204832.0
(22) Date of filing: 29.12.2000
(51) Int. Cl.: A01C 11/00

(54) **Method and apparatus for planting a crop**
Verfahren und Vorrichtung zum Pflanzen von Erntepflanzen
Procédé et dispositif pour planter des plantes de culture

(30) Priority: 29.12.1999 NL 1013986
(43) Date of publication of application: 04.07.2001
(73) Proprietor: Basrijs B.V., 4891 SZ Rijsbergen (NL)
(72) Inventor: Bastiaansen, Corné, 4891 SZ Rijsbergen (NL)
(74) Representative: Bartelds, Erik

(56) References cited:
- US-A- 3 002 473
- US-A- 3 374 752
- US-A- 3 872 805
- US-A- 4 091 751

## Description

The invention relates to a method for planting a crop, in particular leek, comprising of forming shafts in the ground and placing crop plants in these shafts. Such a method is known.

It is of great importance for some crop plants, in particular for leek, that they grow very straight. For leek which is destined for the a fresh-food market this is a prerequisite in achieving a product which can be readily sold. Leek which is industrially processed, for instance for the canned food industry, must also be as straight as possible in order to enable mechanical processing, in particular the mechanical cutting thereof. It has been found in practice that straight growth can only be achieved by placing the leek plants in shafts in which they are received with some clearance. The walls of the shaft will thus guide the growing plant, so that it becomes substantially straight.

In the known method shafts are formed in the ground by inserting pins therein. The crop plants are then placed in the thus formed shafts. The known method takes place substantially by hand, although the forming of the shafts or punched holes can be performed mechanically. The productivity which can be achieved with this method is however low, while the planting operations are unpleasant, and it is therefore difficult to find sufficient suitable personnel for this purpose.

Since the planting of leek in shafts is associated with low productivity, attempts have already been made to sow leek. A sowing process can after all be readily mechanized. This has the drawback however that it is not possible to ensure that the plant grows straight, while in addition the plant is badly soiled by the penetration of sand or soil between the tunics.

US-A-3 872 805 discloses a method and apparatus for planting crop whereby pointed receptacles pivotally mounted on a rotor penetrate the ground.

The invention therefore has for its object to provide a method for planting a crop in shafts, which can be readily at least partly mechanized, and with which a high productivity is ensured. According to the invention this is achieved in a method according to claim 1. By forming the shafts and simultaneously placing plants therein in a single operation, it is possible to work relatively quickly. This operation can furthermore be readily mechanized.

The shafts are formed by first forming a channel, and then re-closing this channel, wherein the shafts are kept open. Keeping the shafts open during closing of a formed, continuous channel is found to be simpler than separate forming of the shafts. The plants can herein be placed in the channel at locations where the shafts are kept open.

The plants are preferably watered after placing. The plants are hereby pushed even further into the shafts, while a bed of mud, in which the plant can root, is moreover thus formed at the bottom of each shaft.

The invention also relates to an apparatus for performing the above described method. Such an apparatus, which is particularly suitable for planting leek, is provided with means for forming shafts in the ground and means co-acting therewith for placing crop plants in the shafts. The plants can hereby be arranged mechanically in the shafts the moment these latter are formed.

According to the invention the planting apparatus is provided with means for forming a channel and means for closing the channel, while the shaft forming means advantageously co-act with the channel forming means and the channel closing means, and are adapted to keep the shafts open. With such a planting apparatus the shafts can be formed quickly and easily in the ground, while the plants can be simultaneously placed in the thus formed shafts.

The shaft forming means preferably comprise a number of tubular elements which are to be inserted into the ground and removed therefrom and which correspond to the shafts. These tubular elements determine precisely defined shafts in the ground. The channel forming means and the channel closing means are advantageously arranged herein in a frame displaceable over the ground, and the tubular elements are movably connected to the frame. A large number of shafts can thus be formed in a short time. The tubular elements are preferably movable relative to the frame in substantially opposite direction to the displacement of the frame and at substantially the displacement speed. Thus is ensured that the tubular elements as it were stand still relative to the ground. When the tubular elements are herein movable relative to the frame practically transversely of the direction of displacement, they can be inserted into and pulled from the ground again substantially vertically.

A structurally simple embodiment is obtained when the tubular elements are connected to an endless moving member arranged in the frame, for instance a belt or chain. The tubular elements are herein preferably connected hingedly to the endless moving member, whereby they can be pulled out of the shafts absolutely vertically without making the shaft oval therein.

The placing means are advantageously adapted to place the crop plants in the tubular elements. The crop plants are thus placed in the ground directly with or immediately after the tubular elements.

In a preferred embodiment the channel forming means comprise at least one cutting member, such as a share or tine. The channel closing means preferably comprise pressing members placed on either side of the channel forming means, for instance in the form of rollers and/or coulters. A plurality of pressing members is advantageously placed successively as seen in the direction of displacement of the frame. The earth removed by the channel forming means can hereby be pressed back again into the thus formed channel in several simple steps.

The planting apparatus is preferably also provided with means for watering the placed plants arranged after the placing means as seen in the direction of displacement of the frame. Thus is prevented that the plants would also have to be individually "earthed".

The invention will now be elucidated on the basis of an embodiment, wherein reference is made to the annexed drawing, in which: .
Figure 1 is a schematic perspective view of a first embodiment of the planting apparatus according to the invention;
Figure 2 is a side view according to arrow II in figure 1; and

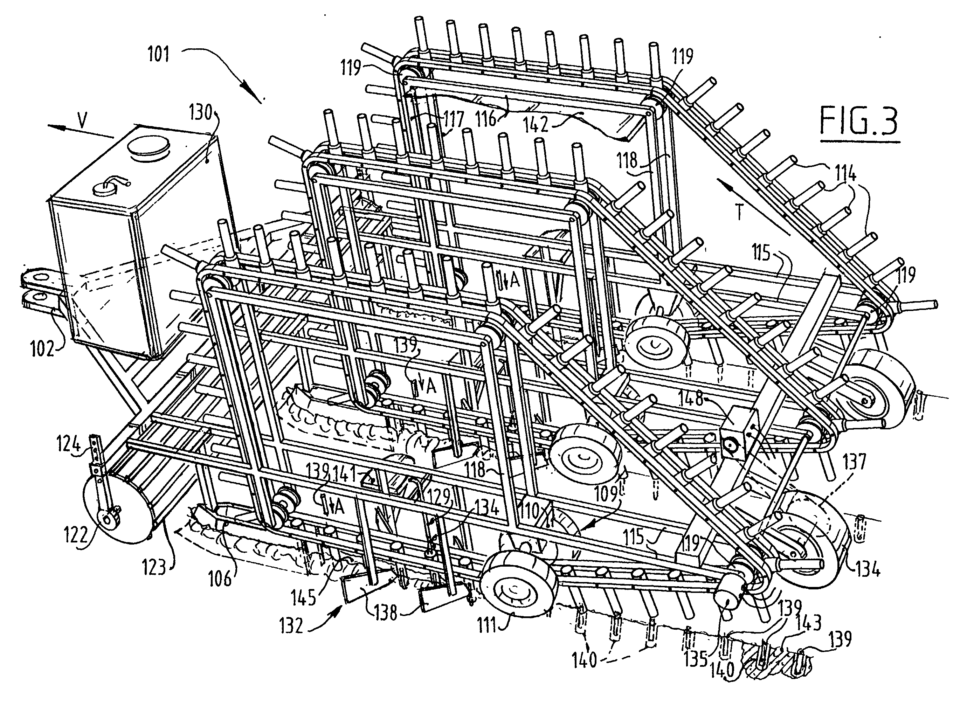

Figure 3 is a view corresponding with fig. 2 of a second embodiment of the planting apparatus 1 which is recommended at the moment.

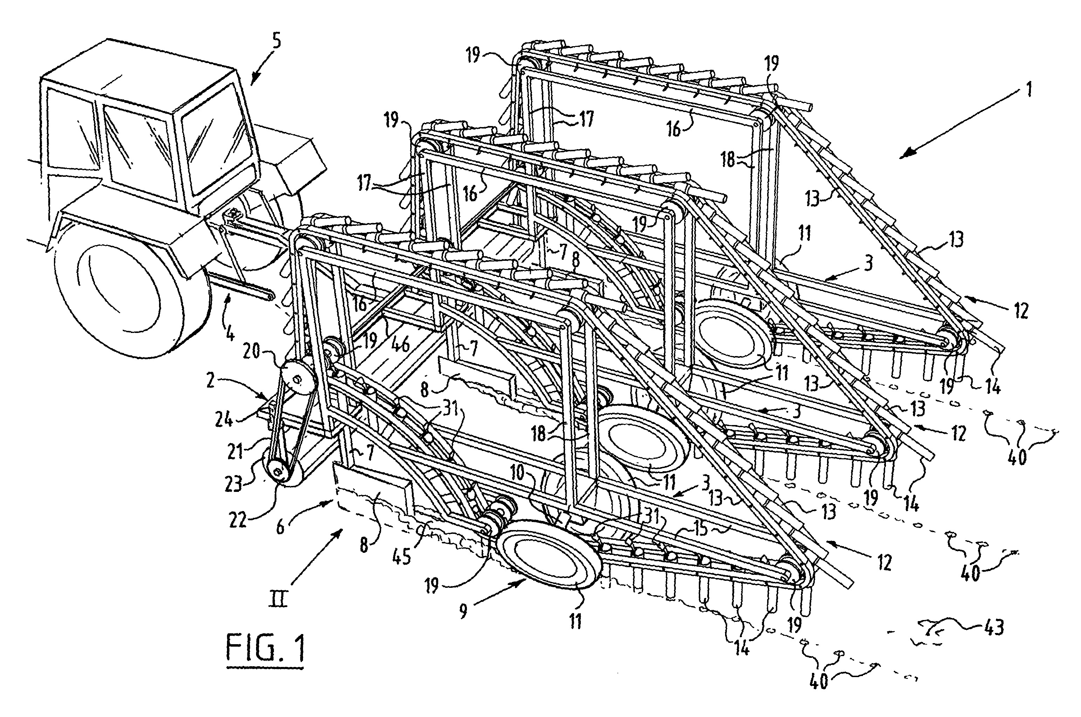

An apparatus 1 (Fig. 1) for planting a crop, in particular leek, in shafts 40 in the ground 43 is provided with a frame which consists of a transverse frame 2 and a number of, in the shown embodiment three, sub-frames 3 suspended therefrom and running in longitudinal direction. The frame is provided with means for coupling thereof to a three-point suspension 4 of a tractor 5, and can be displaced thereby in the direction of arrow V over ground 43.

Planting apparatus 1 is further provided with means 6 for forming channels 45 in ground 43, which channels are formed by three cutting members 8 co-acting with sub-frames 3, in the shown embodiment blades or coulters. These cutting members 8 are connected to sub-frames 3 by means of uprights 7. In addition, planting apparatus 1 has means 9 for re-closing the thus formed channels 45. In the shown embodiment these channel closing means 9 take the form of pressing rollers 11 which are arranged on either side of channel 45, and which are mounted rotatably on shafts 10. These shafts 10 and rollers 11 lie at an acute angle to the horizontal, respectively the vertical, whereby the earth is forced back into channel 45.

Planting apparatus 1 is also provided with means 12 for forming shafts 40 in ground 43. These shaft forming means 12, which co-act with channel forming means 6 and channel closing means 9, are adapted to keep open the shafts 40 when channels 45 are closed. The shaft forming means 12 comprise for this purpose a number of tubular elements 14 which are pivotally connected by means of hinges 25 to a pair of endless elements 13, in the shown embodiment belts. These endless belts 13 are guided over a number of guide rollers 19 accommodated in sub-frame 3, one of which rollers is driven. Sub-frame 3 is herein formed by a pair of lower beams 15, a pair of upper beams 16 which are shorter than lower beams 15, and front and rear pairs of uprights 17 respectively 18. In addition, sub-frame 3 has a curved part 36, the function of which will be elucidated hereinbelow.

Endless belts 13 with tubular elements 14 hingedly suspended therefrom perform a continuous movement which is driven from a depth-adjustment roller 23 mounted in transverse frame 2. For this purpose the roller 23, which is connected height-adjustably to frame 2 via uprights 24, is provided in the shown embodiment with a pulley 22 over which is trained a drive belt 21 which is also trained over a pulley 20 mounted in one of sub-frames 3. Pulley 20 is connected to a shaft 46 on which are mounted the front guide rollers 19 of the three sub-frames 3. In this manner the speed of movement of endless belts 13 is directly related to the rotation speed of pressing roller 23, which is in turn proportional to the speed at which apparatus 1 is advanced over the ground 43. A suitable choice of the diameter of pressing roller 23, driven guide roller 19 and associated pulleys 20, 22 can ensure that tubular elements 14 are moved relative to sub-frame 3 along the bottom part thereof in a direction opposed to the advancing direction with the same speed at which the apparatus 1 as a whole is advanced over the ground 43. In that part of their path the tubular elements 14 then in fact stand still relative to the ground 43.

Planting apparatus 1 further comprises means for placing in tubular elements 14 and clamping therein of the plants 39. The placing and clamping means 32 comprise on one side the open top sides of tubes 14 through which the plants 39 can be placed therein. In addition, the placing and clamping means 32 comprise in the shown embodiment a clamping member which is arranged in each tube 14 and of which only a protruding control part 31 is shown. This clamping member is arranged pivotally in a widened upper part 27 of tubular element 14 and has, in addition to control part 31, a clamping part (not shown here) protruding in tubular element 14. The clamping part is adjusted to the stepped form of tube 14, the bottom part 26 of which has a diameter corresponding to that of the shafts 40 to be formed, while as stated the upper part 27 thereof is widened in order to simplify the arrangement of a plant 39.

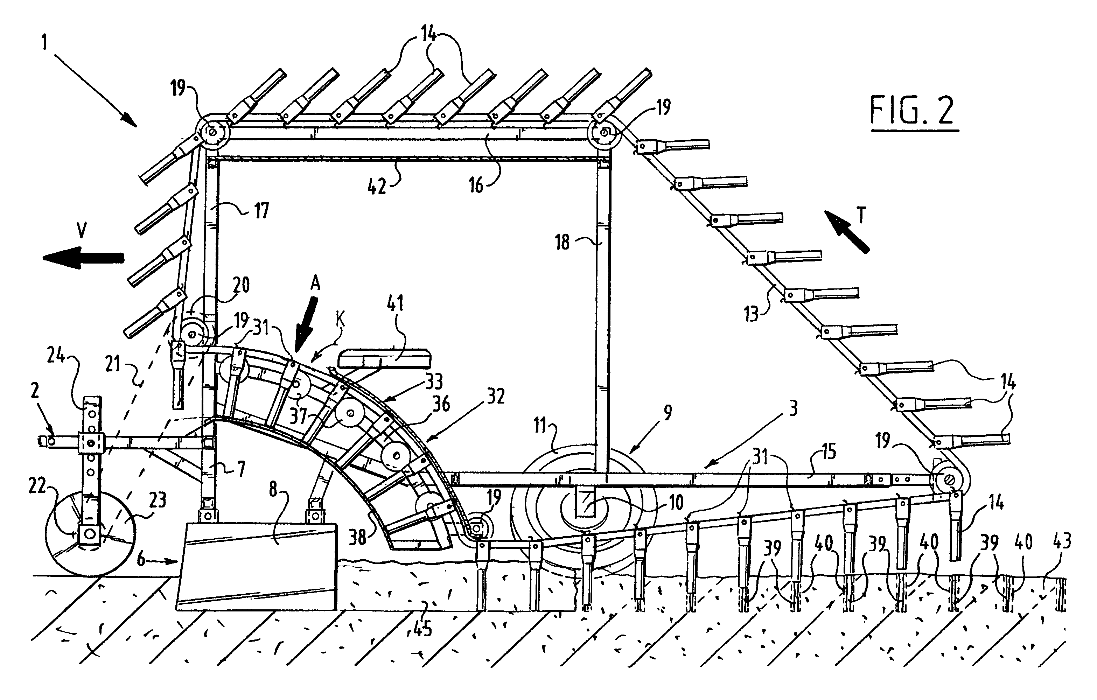

Control part 31 of each clamping member 28 co-acts with control means 33 which are arranged in sub-frame 3. These control means 33 comprise an operating rod arranged at a fixed distance above curved part 36 of sub-frame 3. Further arranged in curved part 36 of the frame are underlying guide rollers which for the sake of clarity are not shown in figure 2 and through which belts 13 are guided. The distance between the operating rod and belts 13 is herein chosen such that control part 31 of the clamping member of tubular element 14 runs up against the operating rod, and is thereby moved rearward as seen in the direction of movement, whereby the clamping member pivots and the clamping part thereof is thus moved to the opposite wall of tubular element 14. At the position of curved part 36 of sub-frame 3 is further arranged a guide plate 38, the distance of which to belt 13 is chosen such that tubular elements 14 are moved closely along this plate 38 with their open underside.

Finally, the placing means further comprise a number of seats 41 which are arranged at the position of the curved part 36 of each sub-frame 3, and on which operating personnel can sit. A cover sheet or guard 42 is further arranged in sub-frame 3 above each seat 41, whereby personnel are protected against weather influences and against soil remnants which could fall from tubular elements 14 during the return movement. In addition, planting apparatus 1 can be provided with carriers, for instance for crates in which the crop plants 39 are supplied, or with a supply system consisting of for instance one or more cross conveyors. These carriers or conveyors do not however form part of the invention and for the sake of clarity are not further shown here.

The operation of apparatus 1 is now as follows. While apparatus 1 is moved over the ground 43 by tractor 5 at a determined speed in the direction of arrow V, the belts 13 with the tubular elements 14 thereon are moved in the opposite direction round sub-frames 3, driven by the rotation movement of pressing roller 23. A crop plant 39 is herein placed into each tubular element 14 in the direction of arrow A by the operating personnel. This plant 39 drops into tube 14 and, with the advancing movement of belts 13 and tubular element 14, is dragged with its root side over bottom plate 38.

When tubular element 14 reaches the beginning of operating rod 34, control part 31 of the clamping member is pivoted in the direction of arrow K, whereby the plant 39 received in tube 14 is clamped against the wall of the tube by the clamping member. Plant 39 is hereby held fast in tube 14, even when tube 14 reaches the end of bottom plate 38. After passing over the bottom guide roller 19, the control part 31 then reaches the end of the operating rod and this pivots back to its starting position, whereby plant 39 is released.

During the movement of planting apparatus 1 a number of channels 45 is also formed by blades 8, in which channels the tubular elements 14 come to lie after passing over the bottom guide roller 19. With a suitable choice of the transmission ratios of the drive, the belt 13 with tubular element 14 herein moves in the lowermost part of its path at the same speed relative to sub-frame 3 as this frame 3 is moved in the direction of arrow V relative to the ground 43. Tubular element 14 hereby stands still relative to the ground 43.

At the position of wheels 11 the channel 45 is then re-closed in that the soil is pressed back therein, wherein tubular element 14 keeps open a shaft 40. Because belt 13 runs gently upward in the lower part of its path, tubular element 14 is pulled slowly out of shaft 40 with a continued movement of apparatus 1. Tubular element 14 is herein guided by the walls of shaft 40 as a result of the pivoting suspension on belt 13. This prevents the shaft 40 being made oval by wriggling of the tube 14 therefrom, as would be the case if tube 14 were rigidly connected to belts 13. Plant 39 thus remains behind in shaft 40.

In this manner a large number of plants 39 can be placed at high speed and with great precision in shafts 40 at the same moment as these are formed. Only a single operation is thus required, whereby tractor 5 thus also has to be driven over the land 43 only once. Since the placing of the plants 39 in tubes 14 still takes place manually, a high precision can be achieved in this respect without large investments. Finally, the working conditions for the planters are in this manner considerably improved in comparison with the old planting methods.

In another embodiment of planting apparatus 101, which is recommended at this moment because of the greater structural simplicity thereof, the placing means 132 no longer comprise a clamping mechanism. The curved frame part is then omitted, and tubes 114 are first inserted into channels 145 formed by cutting members 108, before the plants 139 are lowered therein. Plants 139 then drop directly onto the bottom of channel 145.

In this embodiment the channel closing means 109 are embodied in two stages, and then pressed further down by rollers 111 arranged behind them in the direction of displacement V.

For the driving of the endless belts 113 use is made in this embodiment of a running wheel 134, which provides a hydraulic motor 135 with oil via a so-called "orbit roll" 148, which is connected to running wheel 134 over a chain drive 137. The oil feed and therewith the drive speed of hydraulic motor 135 are thus proportional to the displacement speed of apparatus 101, so that the speed of endless belt 113 is also proportional thereto, and tubes 114 stand still relative to the ground 143. In the shown embodiment the driven rollers 119 of the different sub-frames 103 are otherwise not connected to each other by a continuous, rigid shaft, but by a number of power take-offs of the type which is also used between a tractor and a drawn machine. Small relative movements of sub-frames 103 in vertical direction are hereby possible.

The preferred embodiment of planting apparatus 101 is also provided with means 129 for watering plants 139 after these have been placed in shafts 140. These watering means 129 comprise a tank 130 which is arranged on the front side of planting apparatus 101 and which is connected via conduits (not shown here) to nozzles 134 which are placed above tubes 114 and behind the placing means 132 as seen in the direction of displacement V.

Although the invention is described above on the basis of two embodiments, it will be apparent that these can be varied in many ways. More or fewer sub-frames can thus be placed behind the transverse frame, while the form of the sub-frame, and thus of the path of the tubes, can also be different. Instead of the described driving of the endless belts by the depth-adjustment roller or the running wheel, it is also possible only to measure the displacement speed and to use this measured speed as control signal for driving of the belts. It is further conceivable for plants which are supplied in so-called culture pots or trays for the placing means to be completely automated, whereby placing of the culture pots or tray plants in the tubes can take place wholly mechanically and without intervention of personnel, and productivity can be increased even further.

All that is important is that the tubes are inserted into and pulled out of the ground while they are stationary. The scope of the invention is therefore defined solely by the appended claims.

## Claims

1. Method for planting a crop, in particular leek, comprising of forming shafts (40;140) in the ground (43;143) and placing crop plants (39;139) in these shafts (40;140) substantially simultaneously with the forming of the shafts (40;140), **characterized in that** first a channel (45;145) is formed in the ground and **in that** the shafts (40;140) are formed by lowering tubular elements (14;114) carrying the plants (39;139) into the channel (45;145) and by closing the channel (45;145) before retracting the tubular elements (14,114).

2. Method as claimed in the foregoing claims, **characterized in that** the plants (39) are watered after placing.

3. Apparatus (1;101) for planting a crop, in particular leek, provided with means (12;112) for forming shafts (40;140) in the ground (43;143) and means (32;132) co-acting with the shaft forming means (12;112) for placing the crop plants (39;139) in the shafts (40;140), **characterized by** means (6;106) for forming a channel (45;145) and means (9;109) for closing the channel (45;145), the shaft forming means (12;112) co-acting with the channel closing means (9;109) in such a way that the shafts are kept open by the shaft forming means (12;112) during closing of the channel.

4. Planting apparatus (1;101) as claimed in claim 3, **characterized in that** the shaft forming means (12;112) comprise a number of tubular elements (14;114) which are to be inserted into the ground (43;143) and removed therefrom and which correspond to the shafts (40;140).

5. Planting apparatus (1;101) as claimed in claim 4, **characterized in that** the channel forming means (6;106) and the channel closing means (9;109) are arranged in a frame (2,3;102,103) displaceable over the ground (43;143), and the tubular elements (14;114) are movably connected to the frame (2,3;102,103).

6. Planting apparatus (1;101) as claimed in claim 5, **characterized in that the** tubular elements (14;114) are movable relative to the frame (2,3;102,103) in substantially opposite direction to the displacement of the frame (2,3;102,103) and at substantially the displacement speed (v).

7. Planting apparatus (1;101) as claimed in any of the claims 4 to 6, **characterized in that** behind the channel closing means (9;109) as seen in the direction of displacement of the frame (2,3;102,103) the tubular elements (14;114) are further movable relative to the frame (2,3;102,103) substantially transversely of the direction of displacement.

8. Planting apparatus (1;101) as claimed in claim 6 or 7, **characterized in that** the tubular elements (14;114) are connected to an endless moving member (13;113) arranged in the frame (2,3;102,103).

9. Planting apparatus (1;101) as claimed in claim 8, **characterized in that** the tubular elements (14) are connected hingedly (25) to the endless moving member (13).

10. Planting apparatus (1;101) as claimed in any of the claims 3 to 9, **characterized in that** the channel forming means (6;106) comprise at least one cutting member (8;108).

11. Planting apparatus (1;101) as claimed in any of the claims 3 to 10, **characterized in that** the channel closing means (9;109) comprise pressing members (11;111,138) placed on either side of the channel forming means (6;106).

12. Planting apparatus (101) as claimed in claim 11, **characterized by** a plurality of pressing members (111,138) placed successively as seen in the direction of displacement of the frame (102,103).

13. Planting apparatus (101) as claimed in any of the claims 3 to 12, **characterized by** means (129) for watering the placed plants (139) arranged after the placing means (132) as seen in the direction of displacement of the frame (102,103).

## Patentansprüche

1. Verfahren zum Pflanzen von Feldfrüchten, insbesondere von Porree, bei welchem Schaftlöcher (40; 140) im Boden (43; 143) hergestellt und Feldfruchtpflanzen (39; 139) in diesen Schaftlöchem (40; 140) im Wesentlichen gleichzeitig mit der Erzeugung der Schaftlöcher (40; 140) abgelegt werden,
**dadurch gekennzeichnet, dass** zunächst ein Kanal (45; 145) im Boden ausgeformt wird, und dass die Schaftlöcher (40; 140) dadurch hergestellt werden, dass rohrförmige Elemente (14, 114), die die Pflanzen (39; 139) tragen, in den Kanal (45; 145) abgesenkt werden, und dass der Kanal (45; 145) geschlossen wird, bevor die rohrförmigen Elemente (14; 114) herausgezogen werden.

2. Verfahren nach Anspruch 1,
**dadurch gekennzeichnet, dass** die Pflanzen (39) nach dem Absetzen bewässert werden.

3. Vorrichtung (1; 101) zum Pflanzen von Feldfrüchten, insbesondere von Porree, mit Mitteln (12; 112) zur Erzeugung von Schaftlöchern (40; 140) im Boden (43; 143) und mit Mitteln (32; 132), die mit den die Schaftlöcher erzeugenden Mitteln (12; 112) zusammenwirken, um die Feldfruchtpflanzen (39; 139) in den Schaftlöchern (40; 140) abzulegen,
**gekennzeichnet durch** Mittel (6; 106), die einen Kanal (45; 145) bilden und **durch** Mittel (9; 109), um den Kanal (45; 145) zu schließen, wobei die die Schaftlöcher herstellenden Mittel (12; 112) mit den den Kanal schließenden Mitteln (9; 109) in der Weise zusammenwirken, dass die Schaftlöcher **durch** die die Schaftlöcher herstellenden Mittel (12; 112) während des Schließens des Kanals offen gehalten werden.

4. Pflanzvorrichtung (1; 101) nach Anspruch 3,
**dadurch gekennzeichnet, dass** die die Schaftlöcher herstellenden Mittel (12; 112) aus einer Anzahl rohrförmiger Elemente (14; 114) bestehen, die in den Boden (43; 143) eingestochen und aus diesem herausgezogen werden und die den Schaftlöchern (40; 140) entsprechen.

5. Pflanzvorrichtung (1; 101) nach Anspruch 4,
**dadurch gekennzeichnet, dass** die den Kanal herstellenden Mittel (6; 106) und die den Kanal schließenden Mittel (9; 109) in einem Rahmen (2, 3; 102, 103) angeordnet sind, der über dem Boden (43; 143) verfahrbar ist und dass die rohrförmigen Elemente (14; 114) beweglich mit dem Rahmen (2, 3; 102, 103) verbunden sind.

6. Pflanzvorrichtung (1; 101) nach Anspruch 5,
**dadurch gekennzeichnet, dass** die rohrförmigen Elemente (14; 114) relativ zu dem Rahmen (2, 3; 102, 103) im Wesentlichen in Gegenrichtung zur Bewegungsrichtung des Rahmens (2, 3; 102, 103) und mit im Wesentlichen der gleichen Geschwindigkeit V beweglich sind.

7. Pflanzvorrichtung (1; 101) nach einem der Ansprüche 4 bis 6,
**dadurch gekennzeichnet, dass** in Bewegungsrichtung des Rahmens (2, 3; 102, 103), betrachtet hinter den den Kanal schließenden Mitteln (9; 109), die rohrförmigen Elemente (14; 114) weiter relativ zu dem Rahmen (2, 3; 102, 103) im Wesentlichen quer zur Vorschubrichtung beweglich sind.

8. Pflanzvorrichtung (1; 101) nach den Ansprüchen 6 oder 7,
**dadurch gekennzeichnet, dass** die rohrförmigen Elemente (14; 114) mit einem endlosen Bewegungsglied (13; 113) verbunden sind, das in dem Rahmen (2, 3; 102, 103) angeordnet ist.

9. Pflanzvorrichtung (1; 101) nach Anspruch 8,
**dadurch gekennzeichnet, dass** die rohrförmigen Elemente (14) schwenkbar an dem endlosen Bewegungsglied (13) angelenkt (25) sind.

10. Pflanzvorrichtung (1; 101) nach einem der Ansprüche 3 bis 9,
**dadurch gekennzeichnet, dass** die den Kanal herstellenden Mittel (6; 106) wenigstens eine Pflugschar (8; 108) aufweisen.

11. Pflanzvorrichtung (1; 101) nach einem der Ansprüche 3 bis 10,
**dadurch gekennzeichnet, dass** die den Kanal schließenden Mittel (9; 109) druckausübende Organe (11; 111, 138) aufweisen, die auf beiden Seiten der den Kanal herstellenden Mittel (6; 106) angeordnet sind.

12. Pflanzvorrichtung (101) nach Anspruch 11,
**gekennzeichnet durch** mehrere druckausübende Organe (111, 138), die in Bewegungsrichtung des Rahmens (102, 103) betrachtet hintereinander angeordnet sind.

13. Pflanzvorrichtung (101) nach einem der Ansprüche 3 bis 12,
**gekennzeichnet durch** Mittel (129) zur Bewässerung der abgelegten Pflanzen (139), die in Bewegungsrichtung des Rahmens (102, 103) betrachtet hinter den Ablagemitteln (132) angeordnet sind.

## Revendications

1. Procédé de plantation d'une culture, en particulier des poireaux, comportant les étapes consistant à former des puits (40 ; 140) dans le sol (43 ; 143) et à mettre en place des plants de culture (39 ; 139) dans ces puits (40 ; 140), pratiquement simultanément à la formation des puits (40 ; 140), **caractérisé en ce qu'**un sillon (45 ; 145) est d'abord formé dans le sol, et **en ce que** les puits (40 ; 140) sont formés en abaissant des éléments tubulaires (14 ; 114) supportant les plants (39 ; 139) dans le sillon (45 ; 145), et à fermer le sillon (45 ; 145) avant de retirer les éléments tubulaires (14 ; 114).

2. Procédé selon la revendication 1, **caractérisé en ce que** les plants (39) sont arrosés après mise en place.

3. Dispositif (1 ; 101) de plantation d'une culture, en particulier des poireaux, muni de moyens (12 ; 112) pour former des puits (40 ; 140) dans le sol (43 ; 143), et de moyens (32 ; 132) co-agissant avec les moyens de formation de puits (12 ; 112) pour mettre en place les plants de culture (39 ; 139) dans les puits (40 ; 140), **caractérisé par** des moyens (6 ; 106) pour former un sillon (45 ; 145) et des moyens (9 ; 109) pour fermer le sillon (45 ; 145), les moyens de formation de puits (12 ; 112) co-agissant avec les moyens de fermeture de sillon (9 ; 109) d'une manière telle que les puits sont maintenus ouverts par les moyens de formation de puits (12 ; 112) pendant la fermeture du sillon.

4. Dispositif de plantation (1 ; 101) selon la revendication 3, **caractérisé en ce que** les moyens de formation de puits (12 ; 112) comportent plusieurs éléments tubulaires (14 ; 114) qui doivent être insérés dans le sol (43 ; 143), et enlevés de celui-ci, et qui correspondent aux puits (40 ; 140).

5. Dispositif de plantation (1 ; 101) selon la revendication 4, **caractérisé en ce que** les moyens de formation de sillon (6 ; 106) et les moyens de fermeture de sillon (9 ; 109) sont agencés dans un châssis (2, 3 ; 102, 103) pouvant être déplacé sur le sol (43 ; 143), et les éléments tubulaires (14 ; 114) sont connectés de manière mobile au châssis (2, 3 ; 102, 103).

6. Dispositif de plantation (1 ; 101) selon la revendication 5, **caractérisé en ce que** les éléments tubulaires (14 ; 114) sont mobiles par rapport au châssis (2, 3 ; 102, 103) dans une direction sensiblement opposée au déplacement du châssis (2, 3 ; 102, 103), et pratiquement à la vitesse de déplacement (v).

7. Dispositif de plantation (1 ; 101) selon l'une quelconque des revendications 4 à 6, **caractérisé en ce que** derrière les moyens de fermeture de sillon (9 ; 109), lorsque vu dans la direction de déplacement du châssis (2, 3 ; 102, 103), les éléments tubulaires (14 ; 114) peuvent être déplacés de plus par rapport au châssis (2, 3 ; 102, 103) sensiblement transversalement à la direction de déplacement.

8. Dispositif de plantation (1 ; 101) selon la revendication 6 ou 7, **caractérisé en ce que** les éléments tubulaires (14 ; 114) sont connectés à un élément se déplaçant sans fin (13 ; 113) agencé dans le châssis (2, 3 ; 102, 103).

9. Dispositif de plantation (1 ; 101) selon la revendication 8, **caractérisé en ce que** les éléments tubulaires (14) sont connectés de manière articulée (25) à l'élément se déplaçant sans fin (13).

10. Dispositif de plantation (1 ; 101) selon l'une quelconque des revendications 3 à 9, **caractérisé en ce que** les moyens de formation de sillon (6 ; 106) comportent au moins un élément de découpe (8 ; 108).

11. Dispositif de plantation (1 ; 101) selon l'une quelconque des revendications 3 à 10, **caractérisé en ce que** les moyens de fermeture de sillon (9 ; 109) comportent des moyens de pressage (11 ; 111, 138) positionnés de chaque côté des moyens de formation de sillon (6 ; 106).

12. Dispositif de plantation (101) selon la revendication 11, **caractérisé par** une pluralité d'éléments de pressage (111, 138) positionnés successivement, lorsque vu dans la direction de déplacement du châssis (102, 103).

13. Dispositif de plantation (101) selon l'une quelconque des revendications 3 à 12, **caractérisé par** des moyens (129) destinés à arroser les plants mis en place (139), agencés après les moyens de mise de place (132), lorsque vu dans la direction de déplacement du châssis (102, 103).
